# EUROPÄISCHE PATENTANMELDUNG

(11) **EP 0 971 469 A2**
(43) Veröffentlichungstag der Anmeldung: **12.01.2000**
(21) Anmeldenummer: 99250208.8
(22) Anmeldetag: 25.06.1999
(51) Int. Cl.: H02H 3/00

(54) **Elektronischer Überstromauslöser mit einer analogen Umgehungsschaltung**

(30) Priorität: 09.07.1998 DE 19832599
(71) Anmelder: SIEMENS AKTIENGESELLSCHAFT, 80333 München (DE)
(72) Erfinder: Röhl, Wolfgang, 13503 Berlin (DE); Baumgartl, Ulrich, 13599 Berlin (DE); Hochgraef, Holger, 16845 Ganzer (DE)

(57) **Zusammenfassung**

Ein elektronischer Überstromauslöser für einen Leistungsschalter (1) weist einen Schaltungsteil zur Verarbeitung eines Stromsignals und zur Ausgabe eines Schaltbefehls zur Auslösung des Leistungsschalters (1) bei der Überschreitung eines Grenzwertes des genannten Stromsignales auf. Ferner ist eine analoge Umgehungsschaltung zur Abgabe eines Schaltbefehls für eine unverzögerte Auslösung beim Auftreten eines Kurzschlußstromes im Leistungsschalter (1) vorgesehen, die ein als elektronisches Potentiometer (11) ausgebildetes Einstellorgan für den Ansprechwert aufweist. Eine Schnittstelle (15) des elektronischen Potentiometers (11) dient zum Einlesen und Auslesen von Einstellwerten des Stromes mittels einer Mikroprozessoreinrichtung (4).

## Beschreibung

Die Erfindung betrifft einen elektronischen Überstromauslöser für einen Leistungsschalter mit folgenden Merkmalen:
- es ist ein Schaltungsteil zur Verarbeitung eines Stromsignals und zur Ausgabe eines Schaltbefehls zur Auslösung des Leistungsschalters bei der Überschreitung eines Grenzwertes des genannten Stromsignales vorgesehen,
- zur Abgabe eines Schaltbefehls für eine unverzögerte Auslösung beim Auftreten eines Kurzschlußstromes im Leistungsschalter ist eine gleichfalls mit dem Stromsignal beaufschlagte analoge Umgehungsschaltung des genannten Schaltungsteiles vorgesehen,
- die Umgehungsschaltung weist einen Ansprechwert entsprechend einem durch eine Hauptstrombahn des Leistungsschalters fließenden Kurzschlußstrom auf,
- der Hauptstrombahn des Leistungsschalters ist ein Stromsensor zur Gewinnung des Stromsignals zugeordnet, das einem in der Hauptstrombahn fließenden Strom entspricht.

Ein Überstromauslöser dieser Art ist z.B. durch die EP 0 279 689 A2 oder die DE 44 45 060 C1 bekanntgeworden. Es gibt unterschiedliche Gründe für die Verwendung einer gesonderten analogen Umgehungsschaltung bei einem in der Regel als digitale elektronische Schaltung aufgebauten Überstromauslöser. Einer der Gründe kann darin bestehen, daß eine in der digitalen elektronischen Schaltung enthaltener Mikroprozessor nicht in der Lage ist, aus dem inaktiven Zustand heraus innerhalb einer geforderten sehr kurzen Zeitspanne ein Stromsignal auszuwerten und einen Auslösebefehl abzugeben. Zum Verständnis dieser Forderung sei erwähnt, daß die zum Betrieb eines Überstromauslösers erforderliche Hilfsenergie in der Regel aus dem durch den Leistungsschalter fließenden Strom gewonnen wird, und zwar mittels des erwähnten Stromsensors oder eines gesonderten Hilfsenergiewandlers. Dies bedeutet, daß sich der elektronische Überstromauslöser in einem inaktiven Ruhezustand befindet, wenn der Leistungsschalter ausgeschaltet oder die Schaltanlage vom Netz getrennt ist. Wird der Leistungsschalter nun auf einen unerkannt bestehenden Kurzschluß eingeschaltet, so verstreicht eine unerwünscht lange Zeit, bis die Mikroprozessoreinrichtung des Überstromauslösers betriebsbereit ist und ein ihr zugeführtes Stromsignal auswerten kann. Demgegenüber sind analoge eelektronische Schaltungen in der Lage, sofort zu reagieren. Die geringere Genauigkeit der Signalverarbeitung wirkt sich nicht störend aus, weil es beim Schutz gegen Kurzschlußströme nur auf das Erkennen einer Überschreitung eines vorgegebenen Grenzwertes des fließenden Stromes und die unverzögerte Abgabe eines Auslösebefehls ankommt.

Weitere Gründe für die Benutzung einer analogen Umgehungsschaltung können ein Schutz des Leistungsschalters und/oder eines Verbrauchers bei einem Ausfall oder einer mangelhaften Funktion der digitalee elektronischen Schutzschaltung sein. Insbesondere kann eine Umgehungsschaltung so ausgebildet sein, daß sie auf eine aus beliebigem Grund aufgetretene unzulässig erhöhte Temperatur reagiert, die wichtige Komponenten des Leistungsschalters wie Strombahn oder elektronische Auslöseeinheit schädigen könnte (DE 31 14 547 C2).

Die bisher eingesetzten Umgehungsschaltungen der genannten Art sind auf einen bestimmten Grenzwert entsprechend einem Kurzschlußstrom in der Hauptstrombahn des Leistungsschalters fest eingestellt (EP 0 279 689 A2) oder weisen zur Anpassung an die Zerstörungskennlinie des Leistungsschalters eine strom- und zeitabhängige Kennlinie auf (DE 44 45 060 C1). Ein Benutzer des Leistungsschalters oder dessen Betreuer hat jedoch keine Möglichkeit, eine Einstellung des Grenzwertes der Umgehungsschaltung in Abhängigkeit von Besonderheiten einer Schaltanlage vorzunehmen, wenn man von der sehr aufwendigen und aus Gründen der Betriebssicherheit nicht unbedenklichen Möglichkeit absieht, den Überstromauslöser einschließlich seiner Umgehungsschaltung auszutauschen.

Der Erfindung liegt die Aufgabe zugrunde, die Möglichkeit einer vom Benutzer und/oder einer Serviceperson vorzunehmenden und nachweisbaren Einstellung des Ansprechwertes einer analogen Umgehungsschaltung zu schaffen.

Gemäß der Erfindung wird diese Aufgabe - ausgehend von einem Überstromauslöser der eingangs genannten Art - durch folgende weitere Merkmale gelöst:
- die Umgehungsschaltung ist mit einem als elektronisches Potentiometer ausgebildeten Einstellorgan für den Ansprechwert versehen,
- das elektronische Potentiometer ist mit einer Schnittstelle zum elektronischen Einlesen und Auslesen von Einstellwerten des Stromes versehen.

Obwohl es an sich unzweckmäßig erscheinen könnte, anstelle direkt wirkender und daher unmittelbar reagierender analoger Bauelemente wie z.B. Widerstände und Zenerdioden ein relativ komplexes Bauelement wie ein elektronisches Potentiometer einzusetzen, erweist es sich, daß die Vorteile überraschend sind. Der Vorteil besteht in der fernsteuerbaren Einstellbarkeit und der jederzeit möglichen Anzeige des Einstellwertes. Damit stehen für eine analoge Umgehungsschaltung der vorliegenden Art die gleichen Eigenschaften zur Verfügung, wie sie für mikroprozessorgestützte Systeme charakteristisch sind und diesen zu einer breiten Anwendung verholfen haben.

Der geringe Zeitverlust von etwa 1 ms beim Start eines elektronischen Potentiometers ist gegenüber dem mehr als zehnfachen Wert bei Mikroprozessoren unbedeutend und nimmt daher der analogen Umgehungsschaltung nicht die Eigenschaft einer praktisch unverzögert wirkenden Komponente für den Schutz von Geräten und Anlagen.

Elektronische Potentiometer ("E-Pot") sind an sich bekannt. Beispiele hierfür sind der US 4 668 932 oder der US 4 715 051 zu entnehmen. Ein Speicher sorgt dafür, daß Einstellwerte beim Unterbrechen der Energieversorgung erhalten bleiben. Die Einstellung des elektronischen Potentiometers erfolgt durch eine schrittweise arbeitende Steuerung in der Weise, daß beim Anlegen eines 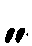 AUF" oder 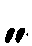 AB"-Signals der nach außen wirkende Widerstandswert des Potentiometers schrittweise erhöht oder erniedrigt wird. Die Verwendung eines solchen elektronischen Potentiometers bei einem Überstromauslöser ist demgegenüber neu und stellt eine wertvolle Verbesserung dar.

Nach einer Weiterbildung der Erfindung kann die Schnittstelle für die Kommunikation mit einer zu dem Überstromauslöser gehörenden Mikroprozessoreinrichtung eingerichtet sein. Damit können die wesentlichen Funktionen der Umgehungsschaltung in die Benutzeroberfläche eines digitalen Überstromauslösers einbezogen werden. Insbesondere können analoge Ansprechwerte nicht nur eingestellt, sondern auch angezeigt werden, wobei dies mittels bekannter Übertragungsmittel auch außerhalb des Leistungsschalters geschehen kann. Demgegenüber ist bei einer Umgehungsschaltung beispielsweise nach der EP 0 279 689 A2 die Überwachung auf die bloße Anzeige beschränkt, daß eine Auslösung des Leistungsschalters durch die Umgehungsschaltung veranlaßt wurde.

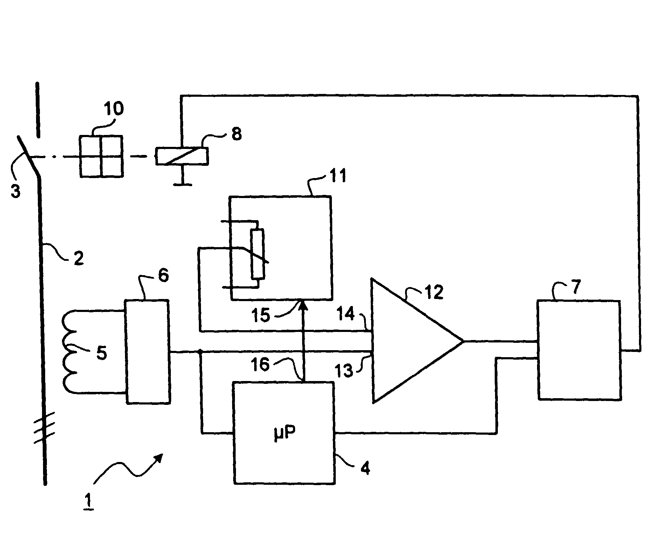

Die Erfindung wird im folgenden anhand des in der Figur dargestellten Ausführungsbeispieles näher erläutert.

Die Figur zeigt in einem Blockschaltbild einen elektronischen Überstromauslöser mit einer analogen Umgehungsschaltung, die ein elektronisches Potentiometer enthält.

In Figur sind als Bestandteile eines Niederspannungs-Leistungsschalters 1 eine Hauptstrombahn 2 mit einer Schaltkontaktanordnung 3 und eine zu einem elektronischen Überstromauslöser gehörende Mikroprozessoreinrichtung 4 gezeigt. Der Hauptstrombahn 2 ist ein Stromsensor 5 einer geeigneten Bauart (induktiver Stromwandler oder Rogowski-Stromwandler) zugeordnet, der in Verbindung mit einer Schaltungsanordnung 6 ein zur weiteren Verarbeitung geeignetes Stromsignal bereitstellt. Ein weiterer Bestandteil des elektronischen Überstromauslösers ist ein Lastschalter 7, der von einem Ausgang der Mikroprozessoreinrichtung 4 steuerbar ist und der zur Betätigung eines Auslösemagneten 8 dient. In bekannter Weise ist der Auslösemagnet 8 zur Lösung der Verklinkung eines Schaltschlosses 10 vorgesehen, durch das die Schaltkontaktanordung 3 in ihrer geschlossenen Stellung gehalten werden kann.

Der Leistungsschalter 1 kann ein- oder mehrpolig sein. Bei mehrpoliger Ausführung sind mehrere Hauptstrombahnen 2 mit Schaltkontaktanordnungen 3 und Stromsensoren 5 vorhanden. Die weiteren Bauteile sind allen Polen des leistungsschalters gemeinsam, da jeweils der höchste auftretende Strom ausgewertet wird.

Im normalen Betrieb prüft die Mikroprozessoreinrichtung 7 ständig das ihr zugeführte Stromsignal und vergleicht es hinsichtlich seiner Höhe und Dauer mit vorgegebenen Kennlinien bzw. Grenzwerten. Werden einer solchen Kennlinie entsprechende Wertepaare des Stromes in der Hauptstrombahn 2 und der Dauer dieses Stromes überschritten, so erhält der Lastschalter 7 einen Schaltbefehl zur Betätigung des Auslösemagneten 8, um die Schaltkontaktanordung 3 zu öffnen.

Wie eingangs erläutert, gibt es jedoch Betriebszustände, die eine sofortige Öffnung der Schaltkontaktanordnung 3 erfordern. Hierzu ist eine Umgehungsschaltung vorgesehen, die mit einer zu vernachlässigenden Verzögerung anspricht und daher auch dann reagiert, wenn der Leistungsschalter aus dem spannungs- und stromlosen Zustand in Betrieb genommen wird. Zu der in der Figur vereinfacht gezeigten Umgehungsschaltung gehören ein elektronisches Potentiometer 11 und ein Komparator 12. Dieser vergleicht das an einem Eingang 13 zugeführte Stromsignal aus der Schaltungsanordnung 6 mit einem an einem weiteren Eingang 14 zugeführten Einstellwert, der gleichfalls einen Strom repräsentiert. Das Ausgangssignal des Komparators 12 wirkt in gleicher Weise auf den Lastschalter 7 wie das zuvor erläuterte Ausgangssignal der Mikroprozessoreinrichtung 4. Daher wird der Auslösemagnet 8 im Fehlerfall zum Schutz des Leistungsschalters 1 und/oder der angeschlossenen Verbraucher mit der geringsten möglichen Verzögerung betätigt.

Im Unterschied zu den bisher bekannten Umgehungsschaltungen gestattet das elektronische Potentiometer 11 die Einstellung eines Ansprechwertes der Umgehungsschaltung durch einen Benutzer. Diese Einstellung kann vorzugsweise mittels der Mikroprozessoreinrichtung 4 erfolgen, wie dies in der Figur durch einen zu einer Schnittstelle gehörenden Steuereingang 15 am elektronischen Potentiometer 11 in Verbindung mit Steuerbefehlen 16 der Mikroprozessoreinrichtung 4 angedeutet ist. Die bei elektronischen Überstromauslösern bekannten Einsteilmittel, d.h. Stellglieder an einem Bedienpult einer Auslöseeinheit sowie an eine geeignete Schnittstelle angeschlossene Handbediengeräte oder Fernbedienungen sind daher auch zur Einstellung der Umgehungsschaltung verwendbar.

## Patentansprüche

1. Elektronischer Überstromauslöser für einen Leistungsschalter (1) mit folgenden Merkmalen:
- es ist ein Schaltungsteil zur Verarbeitung eines Stromsignals und zur Ausgabe eines Schaltbefehls zur Auslösung des Leistungsschalters (1) bei der Überschreitung eines Grenzwertes des genannten Stromsignales vorgesehen,
- zur Abgabe eines Schaltbefehls für eine unverzögerte Auslösung beim Auftreten eines Kurzschlußstromes im Leistungsschalter (1) ist eine gleichfalls mit dem Stromsignal beaufschlagte analoge Umgehungsschaltung des genannten Schaltungsteiles vorgesehen,
- die Umgehungsschaltung weist einen Ansprechwert entsprechend einem vorgegebenen Grenzwert eines durch eine Hauptstrombahn (2) des Leistungsschalters (1) fließenden Stromes auf,
- der Hauptstrombahn (2) des Leistungsschalters (1) ist ein Stromsensor (5) zur Gewinnung des Stromsignals zugeordnet, das einem in der Hauptstrombahn fließenden Strom entspricht,
**gekennzeichnet durch** folgendeweitere Merkmale:
- die Umgehungsschaltung ist mit einem als elektronisches Potentiometer (11) ausgebildeten Einstellorgan für den Ansprechwert versehen,
- das elektronische Potentiometer (11) ist mit einer Schnittstelle zum elektronischen Einlesen und Auslesen von Einstellwerten des Stromes versehen.

2. Elektronischer Überstromauslöser nach Anspruch 1, **dadurch gekennzeichnet,** daß die Schnittstelle für die Kommunikation mit einer zu dem Überstromauslöser gehörenden Mikroprozessoreinrichtung (4) eingerichtet ist.
